# EUROPÄISCHE PATENTANMELDUNG

(11) **EP 0 718 475 A1**
(43) Veröffentlichungstag der Anmeldung: **26.06.1996**
(21) Anmeldenummer: 95119271.5
(22) Anmeldetag: 07.12.1995
(51) Int. Cl.: F01L 1/34, F02D 13/02

(54) **Brennkraftmaschine**

(30) Priorität: 20.12.1994 DE 4445411
(71) Anmelder: ADAM OPEL AG, D-65423 Rüsselsheim (DE)
(72) Erfinder: Janthur, Ingo W., Dipl.-Ing., D-65428 Rüsselsheim (DE)
(74) Vertreter: Kümpfel, Heinz, Dipl.-Ing.

(57) **Zusammenfassung**

Die Erfindung betrifft eine Brennkraftmaschine mit Fremd- oder Selbstzündung, mit einem Abgaskatalysator, einem Abgasturbolader und mindestens einer Auslaßnockenwelle. Damit der Katalysator beim Kaltstart schnell seine Anspringtemperatur erreicht und die Turbine des Abgasturboladers beim Beschleunigen der Brennkraftmaschine schnell hoch dreht, wird mit der Erfindung vorgeschlagen, daß mit einer Nockenwellenverstellvorrichtung die Auslaßnockenwelle immer dann vorverstellt wird, wenn die Brennkraftmaschine beschleunigt werden soll, deren Drehzahl aber noch niedrig ist und noch kein oder nur geringer Ladedruck aufgebaut ist oder wenn die Brennkraftmaschine gerade gestartet worden ist und der Abgaskatalysator seine Betriebstemperatur nicht aufweist. Das dann mit höherer Energie befrachtete Abgas bringt sowohl die Turbine des Laders schneller auf Drehzahl als auch den Abgaskatalysator auf Starttemperatur.

## Beschreibung

Die Erfindung betrifft eine Brennkraftmaschine mit mindestens einem Abgaskatalysator und/oder einem Abgasturbolader sowie mindestens einer Auslaßnockenwelle zur Betätigung von Auslaßventilen.

Bei Brennkraftmaschinen dieser Art müssen Vorkehrungen getroffen werden, damit einerseits beim Kaltstart der Abgaskatalysator schnell seine Betriebstemperatur erreicht und andererseits beim Beschleunigen aus niederer Teillast die Turbine des Abgasturboladers ausreichend mit Energie versorgt wird, um mit dem Lader ausreichend Ladeluft bereitstellen zu können.

Bei den bekannten Brennkraftmaschinen werden diese beiden Probleme durch im wesentlichen getrennte Maßnahmen gelöst. So ist es z. B. durch DE 35 40 013 bekannt, die Zeitdauer zwischen dem Anlassen einer gemischverdichtenden Brennkraftmaschine und dem Erreichen der Anspringtemperatur eines in der Abgasleitung angeordneten Katalysators dadurch zu verkürzen, daß unmittelbar nach dem Start der Brennkraftmaschine durch eine Drosseleinrichtung der Querschnitt der Abgasleitung bis auf einen Mindestquerschnitt verringert und bei Erreichen der Anspringtemperatur des Katalysators wieder freigegeben wird. Während dieser Zeit arbeitet die Brennkraftmaschine aber nur mit Teillast, und eine Turbine eines Abgasturboladers wird nur mit geringer Leistung betrieben. Das Beschleunigen aus diesem Zustand wird daher bei einer Brennkraftmaschine mit Abgasturbolader nur träge erfolgen.

Nach DE 43 27 882 ist es bekannt, bei einer fremdgezündeten Brennkraftmaschine mit einem Einlaßsystem mit Luftmassenmesser, einer willkürlich betätigbaren Drosselklappe und einer unter anderem vom Luftvolumenstrom geregelten Kraftstoffeinspritzanlage sowie einer Einrichtung zur Verstellung des Zündzeitpunktes zur Verkürzung der Aufheizzeit eines Abgaskatalysators beim Starten durch Einstellen eines zusätzlichen Luftvolumenstroms eine für die Aufheizung des Katalysators größere Wärmemenge an den Katalysator zu bringen, wobei der dabei ungewollte Leistungsüberschuß durch gleichzeitiges Verstellen des Zündzeitpunktes in Richtung spät kompensiert wird. Damit kann bei einer fremdgezündeten Brennkraftmaschine die Katalysatorenstartzeit zwar verkürzt werden, jedoch ist eine solche Maßnahme bei einer selbstzündenden Brennkraftmamaschine nicht anwendbar.

Um die Leistung eines Turboladers an ein verbrauchsoptimiertes Kennfeld einer fremdgezündeten Brennkraftmaschine anpassen zu können, wird mit DE 29 06 243 vorgeschlagen, den Zündzeitpunkt in Abhängigkeit von Drehzahl und Druck im Saugrohr so zu verstellen, daß bei Ansteigen des Druckes im Saugrohr nach spät und bei Abfall des Druckes nach früh verstellt wird. Damit kann über einen weiten Betriebsbereich der Brennkraftmaschine die Leistung des Abgasturboladers stabilisiert werden. Ein Einfluß auf die Verkürzung einer Katalysatoranspringzeit liegt hier jedoch nicht vor. Außerdem ist diese Maßnahme nur bei fremdgezündeten Brennkraftmaschinen anwendbar.

DE 41 02 414 beschreibt eine Einrichtung zur Erhöhung der Ladeleistung von Abgasturboladern bei Brennkraftmaschinen im unteren Drehzahlbereich, bei der die Laderwelle mit einem Elektromotor gekuppelt ist, der bei Bedarf aktiviert wird und so unabhängig von der Drehzahl der Brennkraftmaschine optimalen Ladedruck aufbauen kann. Eine solche Einrichtung wirkt nicht auf die Ansprechzeit eines Katalysators. Sie ist darüber hinaus technisch aufwendig und teuer, da sie spezialisierte Turboladergeräte erfordert.

Der Erfindung liegt die Aufgabe zugrunde, eine Brennkraftmaschine mit mindestens einem Abgaskatalysator und/oder einem Abgasturbolader sowie einer Auslaßnockenwelle zur Betätigung von Auslaßventilen dahingehend zu verbessern, daß der Abgaskatalysator beim Kaltstart schnell seine Anspringtemperatur erreicht und daß die Turbine eines Abgasturboladers beim Beschleunigen der Brennkraftmaschine aus dem Leerlauf bzw. aus dem Teillastbereich heraus schnell hoch dreht, so daß durch den Lader auch für das Beschleunigen ausreichender Ladedruck geliefert wird.

Erfindungsgemäß wird diese Aufgabe dadurch gelöst, daß die Auslaßnockenwelle mit einer an sich bekannten Nockenwellenverstelleinrichtung versehen ist, wobei die Auslaßnockenwelle unter der einen oder der beiden nachstehenden Bedingungen,
a) daß die Brennkraftmaschine beschleunigt werden soll, deren Drehzahl aber noch niedrig ist und noch kein oder nur geringer Ladedruck vom Abgasturbolader aufgebaut ist;
b) daß die Brennkraftmaschine gerade gestartet worden ist und der Abgaskatalysator seine Betriebstemperatur nicht aufweist;
vorverstellt ist.

Die Vorverstellung sowie eine Rückstellung der Auslaßnockenwelle kann in vorteilhafter Weise durch eine elektronische Steuereinheit ausgelöst werden, welche aus Signalen der Drehzahl der Brennkraftmaschine, der Drosselklappenstellung sowie der Drosselklappenbeschleunigung, des Ladedrucks und der Temperatur des Abgaskatalysators ein Verstellsignal an die Nockenwellenverstelleinrichtung generiert.

Regeleinrichtungen zum Verstellen einer Nockenwelle sind bekannt und, wie z. B. in DE 41 05 144 oder DE 32 10 914, hinreichend beschrieben. Allerdings wird bei den bekannten Nockenwellenverstelleinrichtungen im allgemeinen die Einlaßnockenwelle und nur in Ausnahmefällen auch die Auslaßnockenwelle verstellt, um durch Veränderung der Ventilöffnungszeiten die Luftschwingungen des Ladungsvorganges auf die Motordrehzahl abzustimmen und so zu besserer Füllung zu gelangen. Die Auswirkung dieser bekannten Maßnahmen sind eine höhere Leistung und/oder ein größeres Drehmoment sowie besserer Drehmomentenverlauf. Die erfindungsgemäße Anwendung einer an sich bekannten Nockenwellenverstelleinrichtung ist damit nicht vorweggenommen.

Durch die vorgeschlagene Maßnahme gelingt es, mit in der Praxis bewährten Systemelementen, nämlich einer Nockenwellenverstelleinrichtung und einer diese steuernde Regeleinrichtung, der Turbine eines Turboladers zu Beginn eines Beschleunigungsvorganges der Brennkraftmaschine zusätzlich Energie zuzuführen und/oder einen noch kalten Abgaskatalysator schneller aufzuheizen.

Bei vorverstellter Auslaßnockenwelle kann die damit verbundene ungewollte Leistungseinbuße durch die nun mögliche Erhöhung des Ladedruckes und ggf. durch Zuführen von mehr Kraftstoff ausgeglichen werden. Dies kann durch Anbindung der Steuereinheit für das Verstellen der Auslaßnockenwelle mit dem elektronischen Motormanagement in einfacher Weise geschehen.

Damit steigt auch gleichzeitig die Energie im Abgasstrom, so daß sich sowohl die Zeit für die Beschleunigung der Turbine als auch die für eine Katalysatoraufheizung weiter verkürzt.

Die Erfindung kann sich sowohl auf fremdgezündete als auch auf selbstzündende Brennkraftmaschinen beziehen.

## Patentansprüche

1. Brennkraftmaschine mit mindestens einem Abgaskatalysator und/oder einem Abgasturbolader sowie mindestens einer Auslaßnockenwelle zur Betätigung von Auslaßventilen, **dadurch gekennzeichnet**, daß die Auslaßnockenwelle mit einer an sich bekannten Nockenwellenverstelleinrichtung versehen ist, wobei die Auslaßnockenwelle unter einer oder beider nachstehenden Bedingungen,
a) daß die Brennkraftmaschine beschleunigt werden soll, deren Drehzahl aber noch niedrig ist und noch kein oder nur geringer Ladedruck vom Abgasturbolader aufgebaut ist;
b) daß die Brennkraftmaschine gerade gestartet worden ist und der Abgaskatalysator seine Betriebstemperatur nicht aufweist;
vorverstellt ist.

2. Brennkraftmaschine nach Anspruch 1, **dadurch gekennzeichnet**, daß eine elektronische Steuereinheit aus Signalen von der Drehzahl der Brennkraftmaschine, der Drosselklappenstellung sowie der Drosselklappenbeschleunigung, des Ladedruckes und der Temperatur des Abgaskatalysators ein Signal zur Vorverstellung der Auslaßnockenwelle sowie zu deren Rückstellung generiert.

3. Brennkraftmaschine nach Anspruch 1 und 2, **dadurch gekennzeichnet**, daß bei vorverstellter Auslaßnockenwelle die damit verbundene unerwünschte Leistungseinbuße durch Erhöhung des Ladedruckes und/oder durch Zuführen von mehr Kraftstoff ausgeglichen ist.
